# EUROPÄISCHE PATENTSCHRIFT

(11) **EP 2 172 301 B1**
(45) Veröffentlichungstag und Bekanntmachung des Hinweises auf die Patenterteilung: **30.11.2011**
(21) Anmeldenummer: 08017270.3
(22) Anmeldetag: 01.10.2008
(51) Int. Cl.: B23Q 1/52, B23Q 1/76, B23Q 7/04, B23C 3/00, B23K 37/047

(54) **Maschine und Verfahren zum Bearbeiten von länglichen Werkstücken**
Method and machine for machining elongated workpieces
Machine et procédé destinés au traitement de pièces à usiner longitudinales

(43) Veröffentlichungstag der Anmeldung: 07.04.2010
(73) Patentinhaber: Trumpf Laser- und Systemtechnik GmbH, 71254 Ditzingen (DE)
(72) Erfinder: Fischer, Gunter, 71297 Mönsheim (DE)
(74) Vertreter: Kohler Schmid Möbus

(56) Entgegenhaltungen:
- EP-A- 0 705 655
- EP-A- 1 068 925
- WO-A-03/047813

## Beschreibung

Die Erfindung betrifft eine Maschine zum Bearbeiten von länglichen Werkstücken, insbesondere von Metallprofilen,
- mit einer Bearbeitungseinrichtung, mittels derer ein mit seiner Längsrichtung entlang einer Maschinen-Längsachse verlaufendes Werkstück bearbeitbar ist,
- mit einerDreheinrichtung sowie
- mit einer steuerbaren Halteeinrichtung für ein Werkstück, die an der Dreheinrichtung angebracht und mittels der Dreheinrichtung um die Maschinen-Längsachse drehbar ist und die in einen Haltezustand sowie in einen Freigabezustand überführbar ist, wobei die Halteeinrichtung das Werkstück bei Haltezustand in Richtung der Maschinen-Längsachse festlegt und bei Freigabezustand für eine Bewegung entlang der Maschinen-Längsachse freigibt.

Eine derartige Maschine ist bekannt aus WO 03/047813 A1 sowie aus EP 1 068 925 A2.

Gemäß WO 03/047813 A1 weist eine Maschine zum Bearbeiten von länglichen Profilen zwei Zentriereinheiten sowie zwei Halteeinheiten auf. Die Zentriereinheiten sind in unmittelbarer Nähe eines Bearbeitungskopfes angeordnet und dabei dem Bearbeitungskopf in Werkstück-Längsrichtung beidseits benachbart. Sie positionieren das betreffende Werkstück in seiner Querrichtung und lassen gleichzeitig eine Werkstückbewegung in Werkstück-Längsrichtung zu. Die Halteeinheiten sind an den in Werkstück-Längsrichtung voneinander abliegenden Seiten der Zentriereinrichtungen vorgesehen. Sie können einzeln oder gemeinsam an dem betreffenden Werkstück festgelegt werden und anschließend mit einer Vorschubbewegung in Werkstück-Längsrichtung verfahren. Wird zum Werkstückvorschub nur eine der Halteeinheiten genutzt, befindet sich also nur eine der Halteeinheiten im Haltezustand, so ist die zweite Halteeinheit in einen Freigabezustand geschaltet. Bei diesem Zustand der zweiten Halteeinheit kann das Werkstück durch die zweite Halteeinheit hindurchgleiten.

EP 1 068 925 A2 offenbart eine Lasermaschine, an der mittels eines Bearbeitungskopfes längliche Werkstücke bearbeitet werden. Entlang einer in Längsrichtung der zu bearbeitenden Werkstücke verlaufenden Maschinen-Längsachse sind an beiden Seiten des Bearbeitungskopfes jeweils eine Halteeinheit sowie eine zugeordnete Zentriereinheit vorgesehen. Die für den Werkstückvorschub genutzte Halteeinheit ergreift das von dem Bearbeitungskopf abliegende Ende des betreffenden Werkstückes und positioniert das Werkstück anschließend in Richtung der Maschinen-Längsachse. Bei seiner Längsbewegung wird das Werkstück durch die jeweilige, in der Nähe des Bearbeitungskopfes angeordnete Zentriereinheit hindurchgeschoben. Dabei wird das Werkstück mittels der Zentriereinheit in Querrichtung der Maschinen-Längsachse gegenüber dem Bearbeitungskopf in eine Solllage positioniert.

Einer andere Maschine ist in EP 0 705 655 A1 offenbart. An der vorbekannten Maschine sind entlang einer längs eines Maschinenbettes verlaufenden Maschinen-Längsachse insgesamt drei Halte- und Zentriervorrichtungen für ein Werkstück angeordnet. Die mittlere Halte- und Zentriervorrichtung ist stationär, die beiden außenliegenden Halte- und Zentriervorrichtungen können entlang der Maschinen- Längsachse verfahren. Jede der Halte- und Zentriervorrichtungen weist ein Spannfutter mit vier Spannbacken auf, die einander an der Maschinen-Längsachse paarweise gegenüberliegen. Um die Maschinen-Längsachse sind die vier Spannbacken des Spannfutters um 90° gegeneinander versetzt. Bei geschlossenem Spannfutter wird ein die betreffende Halte- und Zentriervorrichtung durchsetzendes Werkstück mittels der Spannbacken sowohl in Richtung der Maschinen-Längsachse fixiert als auch quer zu der Maschinen-Längsachse zentriert. Ist das Spannfutter geöffnet, so ist das Werkstück für eine in Richtung der Maschinen-Längsachse auszuführende Bewegung relativ zu der betreffenden Halte- und Zentriervorrichtung freigegeben. Es ist dann möglich, das Werkstück gegenüber der Halte- und Zentriervorrichtung entlang der Maschinen-Längsachse nachzusetzen. Ein derartiges Nachsetzen des Werkstückes ist insbesondere erforderlich, damit ein Werkstück mittels der Bearbeitungseinrichtung der Maschine über eine Länge bearbeitet werden kann, welche die maximale Verfahrweglänge der Bearbeitungseinrichtung in Richtung der Maschinen-Längsachse übersteigt. Im Anschluss an das Nachsetzen des Werkstückes wird das zuvor geöffnete Spannfutter wieder geschlossen. Das Werkstück ist an der Halte- und Zentriervorrichtung dann erneut in Richtung der Werkstück-Längsachse fixiert und quer zu der Maschinen-Längsachse zentriert. Nur bei einer Zentrierung des Werkstückes ist eine hochgenaue Werkstückbearbeitung möglich.

Ausgehend von dem vorstehend beschriebenen Stand der Technik liegt der anmeldungsgemäßen Erfindung die Aufgabe zugrunde, eine qualitativ hochwertige Bearbeitung länglicher Werkstücke mittels einer kompakt bauenden Maschine zu ermöglichen.

Erfindungsgemäß gelöst wird diese Aufgabe durch die Maschine nach Patentanspruch 1.

Im Falle der erfindungsgemäßen Maschine sind die Halteeinrichtung und die Zentriereinrichtung der Halte- und Zentriervorrichtung an ein und derselben Dreheinrichtung vorgesehen. Die Halteeinrichtung und die Zentriereinrichtung können voneinander entkoppelt betätigt werden. Infolgedessen sind der Freigabezustand der Halteeinrichtung und der zentrierende Zustand der Zentriereinrichtung zeitgleich realisierbar. Dieses Merkmal gestattet es, ein Werkstück in Richtung der Maschinen-Längsachse relativ zu der Halte- und Zentriervorrichtung zu bewegen, ohne dass zu diesem Zweck die Zentrierung des Werkstückes aufgehoben werden müsste. Nach Abschluss der Relativbewegung ist lediglich die Halteeinrichtung aus dem Freigabe- in den Haltezustand zu überführen. Die Notwendigkeit einer erneuten Zentrierung des Werkstückes entfällt. Das Werkstück behält folglich ungeachtet etwaiger Nachsetzbewegungen eine einmal definierte Solllage quer zu der Maschinen-Längsachse bei. Dieser Umstand wirkt sich auf die erzielbare Bearbeitungsgenauigkeit positiv aus. So ergibt sich quer zu der Maschinen-Längsachse auch bei Nachsetzbewegungen des Werkstückes eine einheitliche gegenseitige Zuordnung von Werkstück und Bearbeitungseinrichtung. Die Anordnung der Halteeinrichtung und der Zentriereinrichtung an der gemeinsamen Dreheinrichtung gestattet es, jede beliebige Stelle an dem Außenumfang eines Werkstückes für die Bearbeitungseinrichtung zugänglich zu machen.

Die erfindungsgemäße Maschine arbeitet nach einem Verfahren, das mittels eines hierfür erstellten und auf einer numerischen Maschinensteuerung der erfindungsgemäßen Bearbeitungsmaschine ausgeführten Bearbeitungsprogrammes durchgeführt wird. Dieses Bearbeitungsprogramm umfasst eine Vielzahl von Steuerbefehlen, mittels derer die Halteeinrichtung sowie die Zentriereinrichtung, insbesondere Antriebe dieser Einrichtungen, entsprechend gesteuert werden. Die Steuerbefehle werden im Rahmen eines Verfahrens zum Erstellen des auszuführenden Bearbeitungsprogramms erzeugt. Zum Durchführen der Schritte des Verfahrens zum Erstellen des Bearbeitungsprogramms dient ein Computerprogrammprodukt mit entsprechenden Codierungsmitteln. Dieses Computerprogrammprodukt bildet einen wesentlichen Bestandteil eines rechnergestützten Programmiersystems, das seinerseits den Anwender in die Lage versetzt, die Steuerbefehle zur Durchführung des Bearbeitungsprogramms zu generieren.

Besondere Ausführungsarten der Erfindung ergeben sich aus den abhängigen Patentansprüchen 2 bis 7

Gemäß Patentanspruch 2 ist wenigstens ein Wälzelement als Zentrierelement der Zentriereinrichtung vorgesehen. Aufgrund ihrer drehbaren Lagerung erlauben derartige Zentrierelemente reibungsarme Bewegungen zentrierter Werkstücke entlang der Maschinen-Längsachse.

In bevorzugter Ausgestaltung der Erfindung weisen die Halteeinrichtung und die Zentriereinrichtung der Halte- und Zentriervorrichtung ein gemeinsames Halte- und Zentrierelement auf (Patentanspruch 3). Dieses Bauteil übernimmt im Interesse eines einfachen und insbesondere im Interesse eines kompakten Aufbaus der Halte- und Zentriervorrichtung eine Doppelfunktion.

Patentanspruch 4 beschreibt eine besonders zweckmäßige Bauart eines Halte- und Zentrierelementes. Zur Überführung in den Haltezustand ist das als Wälzelement ausgebildete Halte- und Zentrierelement lediglich gegen eine Drehbewegung um seine Drehachse zu sperren. Ist diese Bewegungssperre aufgehoben, so lässt das Halte- und Zentrierelement eine reibungsarme Bewegung des zentrierten Werkstückes entlang der Maschinen-Längsachse zu.

Die Patentansprüche 5 und 6 betreffen kompakte Ausführungsformen der erfindungsgemäßen Halte- und Zentriervorrichtung.

Gemäß Patentanspruch 7 sind im Falle einer weiteren bevorzugten Bauart der erfindungsgemäßen Maschine zwei Halte- und Zentriervorrichtungen vorgesehen, die entlang der Maschinen-Längsachse gegeneinander versetzt angeordnet und relativ zueinander bewegbar sind. Während der Relativbewegung der Halte- und Zentriervorrichtungen befinden sich beide Zentriereinrichtungen im zentrierenden Zustand. Die Halteeinrichtung an einer der Halte- und Zentriervorrichtungen ist in den Haltezustand, die Halteeinrichtung der anderen Halte- und Zentriervorrichtung in den Freigabezustand geschaltet. Auf diese Art und Weise lassen sich mittels der beiden Halte- und Zentriervorrichtungen auf flexible Art und Weise Bewegungen eines Werkstückes entlang der Maschinen-Längsachse realisieren.

Nachstehend wird die Erfindung anhand beispielhafter schematischer Darstellungen näher erläutert. Es zeigen:
- Fig. 1:: eine erste Bauart einer Halte- und Zentriervorrichtung für Einzel- und Endlosprofile,
- Fig. 2:: eine zweite Bauart einer Halte- und Zentriervorrichtung für Einzel- und Endlosprofile,
- Fig. 3a:: eine Laserbearbeitungsmaschine mit zwei Halte- und Zentriervorrich- tungen gemäß Fig. 1 in einer ersten Phase einer Werkstückbearbeitung,
- Fig. 3b:: die Halte- und Zentriervorrichtungen gemäß Fig. 3a in Alleindarstellung,
- Fign. 4a, 4b, 5a, 5b, 6a, 6b, 7a, 7b:: die Anordnungen gemäß den Fign. 3a und 3b in weiteren Phasen einer Werkstückbearbeitung und
- Fig. 8:: eine Laserbearbeitungsmaschine mit einer einzelnen Halte- und Zent- riervorrichtung gemäß Fig. 1,

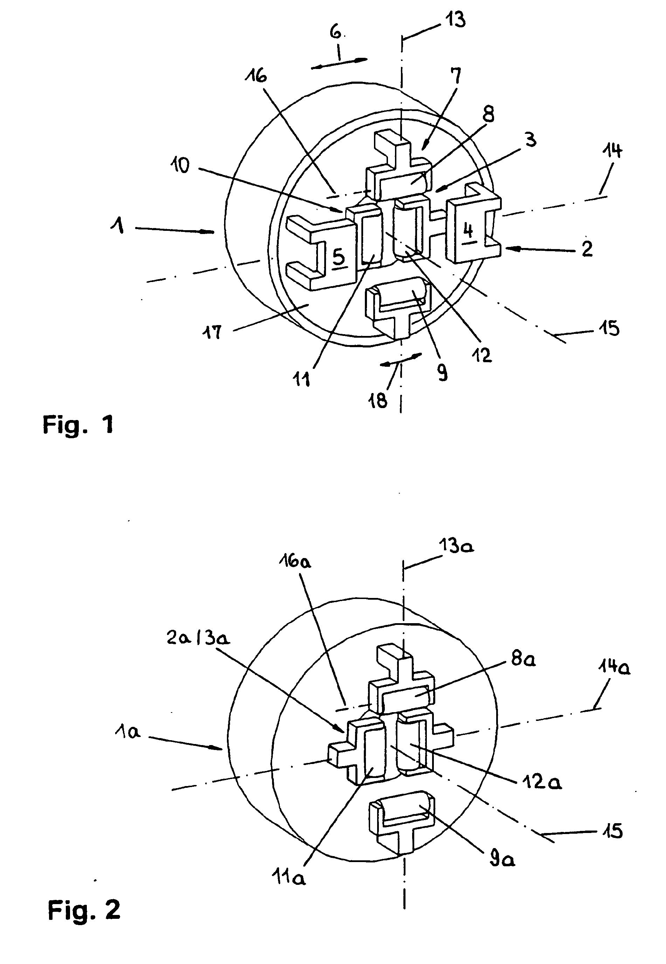

Gemäß Fig. 1 weist eine Halte- und Zentriervorrichtung 1 eine steuerbare Halteeinrichtung 2 sowie eine gleichfalls steuerbare Zentrierereinrichtung 3 auf. Bei der Halteeinrichtung 2 handelt es sich um ein Spannfutter mit zwei als Spannbacken 4, 5 ausgebildeten Halteelementen, die in Richtung eines Doppelpfeils 6 aufeinander zu oder voneinander weg bewegbar sind. Die Zentriereinrichtung 3 umfasst ein Zentrierrollenpaar 7 mit als Zentrierrollen 8, 9 ausgebildeten Zentrierelementen sowie ein Zentrierrollenpaar 10 mit Zentrierelementen in Form von Zentrierrollen 11, 12. Eine von den Zentrierrollen 8, 9 definierte Zentrierachse 13 verläuft senkrecht zu einer Zentrierachse 14 der Zentrierrollen 11, 12. In Richtung der Zentrierachse 13 sind die Zentrierrollen 8, 9 relativ zueinander zustellbar. Entsprechende Zustellbewegungen können die Zentrierrollen 11, 12 entlang der Zentrierachse 14 ausführen. Das Zentrum der Zentriereinrichtung 3 liegt-auf einer mit der Längsmittelachse der Halte- und Zentriervorrichtung 1 zusammenfallenden Maschinen-Längsachse 15. Sämtliche Zentrierrollen 8, 9, 11, 12 sind frei um eine Drehachse drehbar, die jeweils senkrecht zu der Maschinen-Längsachse 15 verläuft. Eine Drehachse 16 der Zentrierrolle 8 ist in Fig. 1 beispielhaft angedeutet.

Das Zentrierrollenpaar 7, das Zentrierrollenpaar 10 sowie das Spannbackenpaar mit den Spannbacken 4, 5 sind entlang der Maschinen-Längsachse 15 gegeneinander versetzt. Sowohl die Halteeinrichtung 2 mit den Spannbacken 4, 5 als auch die Zentriereinrichtung 3 mit den Zentrierrollenpaaren 7, 10 sind an einem lediglich in Fig. 1 andeutungsweise gezeigten Rundschalttisch 17 angebracht und mittels des Rundschalttisches 17 gemeinschaftlich um die Maschinen-Längsachse 15 drehbar. Die Drehbeweglichkeit des Rundschalttisches 17 bzw. der Halteeinrichtung 2 und der Zentriereinrichtung 3 ist in Fig. 1 durch einen Doppelpfeil 18 veranschaulicht. Anstelle des Rundschalttisches 17 sind auch andere Dreheinrichtungen denkbar.

Eine als gleichwertige Alternative zu der Halte- und Zentriervorrichtung 1 einsetzbare Halte- und Zentriervorrichtung 1a zweiter Bauart ist in Fig. 2 dargestellt. Abweichend von der Halte- und Zentriervorrichtung 1 gemäß Figur 1 weisen eine Halteeinrichtung 2a und eine Zentriereinrichtung 3a gemeinsame Halteund Zentrierelemente 8a, 9a, 11a, 12a auf. Bei letzteren handelt es sich um Wälzelemente, im gezeigten Beispielsfall um Rollen, die wahlweise gegen eine Drehung um ihre Achsen, beispielsweise um eine Drehachse 16a, gesperrt oder für eine derartige Drehung freigegeben werden können. Sind die Rollen 8a, 9a, 11a, 12a gegen eine Drehbewegung gesperrt, so übernehmen sie die Funktion der Halteeinrichtung 2a. Abweichend von der beschriebenen Ausführungsform kann auch nur ein Teil der Rollen 8a, 9a, 11a, 12a gegen eine Drehbewegung sperrbar sein.

Unabhängig von ihrer Drehbeweglichkeit definieren die Rollen 8a, 9a, 11a, 12a ein auf der Maschinen-Längsachse 15 liegendes Zentrum sowie Zentrierachsen 13a, 14a und bilden auf diese Weise eine Zentriereinrichtung 3a. Sind die Rollen 8a, 9a, 11a, 12a frei drehbar, so gestatten sie auch im zentrierenden Zustand eine Relativbewegung zwischen der Halte- und Zentriervorrichtung 1a und einem diese durchsetzenden und parallel zu der Maschinen-Längsachse 15 ausgerichteten Werkstück.

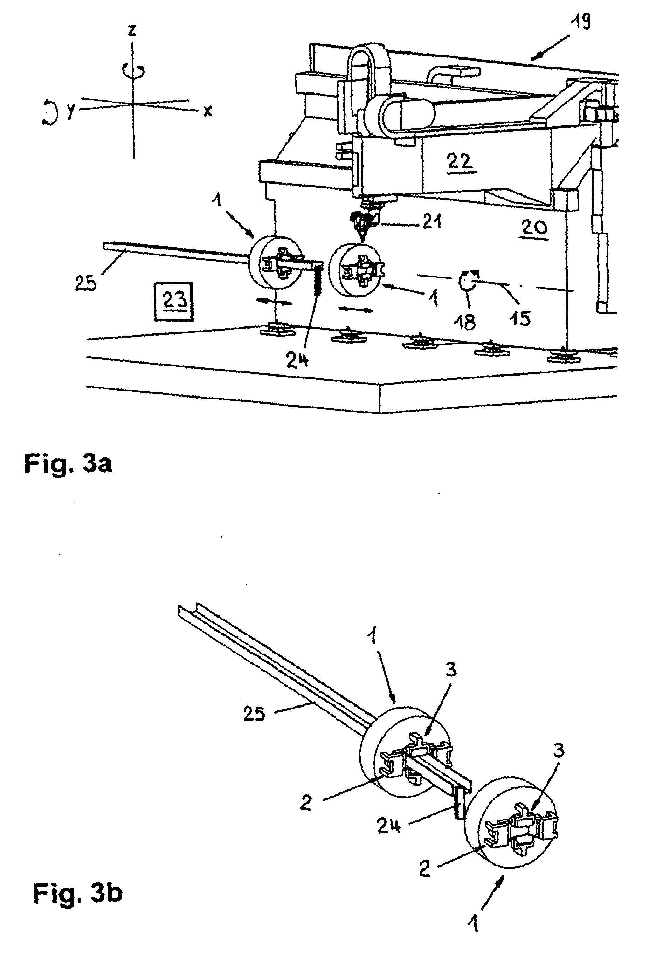

Gemäß den Fign. 3a bis 7b sind zwei Halte- und Zentriervorrichtungen 1 der in Fig. 1 dargestellten Bauart als Komponenten einer Laserbearbeitungsmaschine, vorliegend einer Laserschneidmaschine 19, vorgesehen. Alternativ könnten zwei Halte- und Zentriervorrichtungen 1a verwendet werden.

Beide Halte- und Zentriervorrichtungen 1 sind an einem Maschinenbett 20 der Laserschneidmaschine 19 angebracht und dabei unabhängig voneinander entlang der Maschinen- Längsachse 15 translatorisch bewegbar. Die Halteeinrichtung 2 und die Zentriereinrichtung 3 an der einen Halte- und Zentriervorrichtung 1 können unabhängig von der Halteeinrichturig 2 und der Zentriereinrichtung 3 an der anderen Halte- und Zentriervorrichtung 1 um die Maschinen-Längsachse 15 in Richtung des Doppelpfeils 18 gedreht werden. Eine als Laserschneidkopf 21 ausgeführte Bearbeitungseinrichtung ist an dem freien Ende eines Auslegers 22 der Laserschneidmaschine 19 angebracht. Alternativ sind als Bearbeitungseinrichtung unter anderem auch eine Einrichtung zum Autogen- und/oder eine Einrichtung zum Plasmaschneiden denkbar.

Durch Verfahren des Auslegers 22 längs des Maschinenbettes 20 kann der Laserschneidkopf 21 entlang der parallel zu einer x-Achse verlaufenden Maschinen-Längsachse 15 bewegt werden. An dem Ausleger 22 kann der Laserschneidkopf 21 in Richtung einer senkrecht zu der x-Achse bzw. der Maschinen-Längsachse 15 verlaufenden γ-Achse verfahren. Außerdem ist der Laserschneidkopf 21 in Richtung einer vertikalen z-Achse beweglich und um die γ-Achse sowie um die z-Achse drehbar.

Alle wesentlichen Funktionen der Laserschneidmaschine 19 werden numerisch gesteuert. Eine CNC-Steuerung 23 ist in Figur 3a skizziert. In den Figuren 3a bis 4b ist außerdem ein maschinenseitiger Festanschlag 24 angedeutet. In dem anhand der Figuren 3a bis 7b veranschaulichten Bearbeitungsbeispiel wird die Laserschneidmaschine 21 zur schneidenden Bearbeitung eines Werkstückes in Form eines metallenen Profilstabes 25 eingesetzt. Die Länge des Profilstabes 25 übersteigt die maximale Verfahrweglänge des Laserschneidkopfes 21 in Richtung der x-Achse.

Mittels der CNC-Steuerung 23 wird ein numerisches Bearbeitungsprogramm zum Betreiben der Laserschneidmaschine 19 abgearbeitet. Das numerische Bearbeitungsprogramm wird mittels eines Programmiersystems erstellt. Wesentlicher Bestandteil des Programmiersystems ist ein Computerprogrammprodukt zur Erzeugung der einzelnen Steuerbefehle des numerischen Bearbeitungsprogramms.

Zu Beginn der Werkstückbearbeitung befindet sich sowohl die Halteeinrichtung 2 der hinteren Halte- und Zentriervorrichtung 1 (in den Abbildungen links) als auch die Halteeinrichtung 2 der vorderen Halte- und Zentriervorrichtung 1 (in den Abbildungen rechts) in einem Freigabezustand. Die Spannbacken 4, 5 der Halteeinrichtungen 2 nehmen dementsprechend ihre zurückgezogene Position ein. Auch die Zentriereinrichtungen 3 der beiden Halte- und Zentriervorrichtungen 1 sind geöffnet und dementsprechend unwirksam.

Bei diesem Funktionszustand der Halte- und Zentriervorrichtungen 1 wird der zu bearbeitende Profilstab 25 mit einem Längsende entlang der Maschinen-Längsachse 15 in die hintere Halte- und Zentriervorrichtung 1 eingeführt. Die Zufuhr des Profilstabes 25 kann maschinell, beispielsweise mit Hilfe einer angetriebenen Rollenbahn, aber auch von Hand erfolgen. Die Vorschubbewegung des Profilstabes 25 endet, sobald dessen voreilendes Ende an dem maschinenseitigen Festanschlag 24 zur Anlage kommt. Die sich damit ergebenden Verhältnisse sind in den Fign. 3a und 3b dargestellt. Mittels des Festanschlages 24 wird für die CNC-Steuerung 23 der Laserschneidmaschine 19 die Nulllage des Profilstabes 25 in x-Richtung definiert, von der ausgehend der Profilstab 25 im Laufe der Werkstückbearbeitung bewegt wird.

Sobald der Profilstab 25 mit seinem voreilenden Längsende an dem Festanschlag 24 anliegt, wird die Zentriereinrichtung 3 der hinteren Halte- und Zentriervorrichtung 1 in den zentrierenden Zustand überführt. Zu diesem Zweck werden die Zentrierrollen 8, 9, 11, 12 der Zentriereinrichtung 3 entlang der Zentrierachsen 13, 14 gegeneinander bewegt. Der Profilstab 25 wird dadurch quer zu der Maschinen-Längsachse 15 zentriert, das heißt in eine Solllage überführt. Im zentrierenden Zustand der Zentriereinrichtung 3 liegen die Zentrierrollen 8, 9, 11, 12 an den Längsseiten des Profilstabes 25 von außen spielfrei und im wesentlichen drucklos an. Zeitgleich oder unmittelbar im Anschluss an die Zentrierung des Profilstabes 25 wird die Halteeinrichtung 2 der hinteren Halte- und Zentriervorrichtung 1 aus dem Freigabezustand in den Haltezustand überführt. Zu diesem Zweck werden die geöffneten Spannbacken 4, 5 der Halteeinrichtung 2 so weit gegeneinander bewegt, bis sie den Profilstab 25 an einander gegenüberliegenden Seiten unter Vorspannung beaufschlagen. Dadurch ist der Profilstab 25 an der hinteren Halte- und Zentriervorrichtung 1 in Richtung der Maschinen-Längsachse 15 festgelegt.

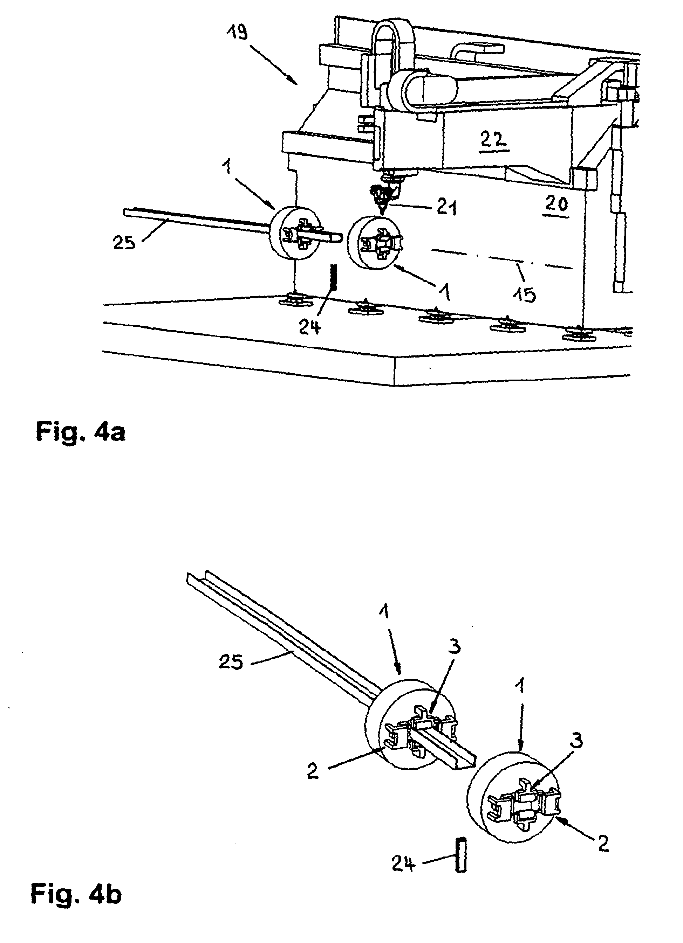

Der Festanschlag 24 wird nun in radialer Richtung der Maschinen-Längsachse 15 aus dem Bewegungsbereich der Halte- und Zentriervorrichtungen 1 entfernt. An der vorderen Halte- und-Zentriervorrichtung 1 befinden sich die Halteeinrichtung 2 und die Zentriereinrichtung 3 nach wie vor im geöffneten Zustand (Fign. 4a,4b).

Ausgehend von ihrer Position gemäß Fig 4a verfährt die vordere Halte- und Zentriervorrichtung 1 entlang der Maschinen-Längsachse 15 in Richtung auf die hintere Halte- und Zentriervorrichtung 1. Aufgrund dieser Relativbewegung der Halte- und Zentriervorrichtungen 1 läuft das von der hinteren Halte- und Zentriervorrichtung 1 vorkragende Ende des Profilstabes 25 in die vordere Halte- und Zentriervorrichtung 1 ein rund kommt dort zwischen den zurückgezogenen Spannbacken 4, 5 der Halteeinrichtung 2 sowie zwischen den gleichfalls zurückgezogenen Zentrierrollen 8, 9, 11, 12 zu liegen. In der zu den Figuren 3a, 3b bezüglich der hinteren Halte- und Zentriervorrichtung 1 beschriebenen Weise wird der Profilstab 25 nun an der vorderen Halte- und Zentriervorrichtung 1 durch Betätigen der Zentriereinrichtung 3 zentriert und durch Betätigen der Halteeinrichtung 2 in Richtung der Maschinen-Längsachse 15 festgelegt. Nach der Zentrierung und Festlegung des Profilstabes 25 an der vorderen Halte- und Zentriervorrichtung 1 wird die Halteeinrichtung 2 der hinteren Halte- und Zentriervorrichtung 1 durch Öffnen der Spannbacken 4, 5 aus dem Haltezustand in den Freigabezustand überführt. Die Zentriereinrichtung 3 der hinteren Halte- und Zentriervorrichtung 1 behält ihren zentrierenden Zustand bei. Bei Freigabezustand der Halteeinrichtung 2 und bei gleichzeitig realisiertem zentrierenden Zustand der Zentriereinrichtung 3 an der hinteren Halte- und Zentriervorrichtung 1 bewegt sich die vordere Halte- und Zentriervorrichtung aus der nicht gezeigten Position nahe der hinteren Halte- und Zentriervorrichtung 1 gemeinsam mit dem an ihr festgelegten Profilstab 25 zurück in Richtung auf ihre Ausgangsposition. Dabei ist der Profilstab 25 sowohl an der hinteren Halte- und Zentriervorrichtung 1 als auch an der vorderen Halte- und Zentriervorrichtung 1 zentriert.

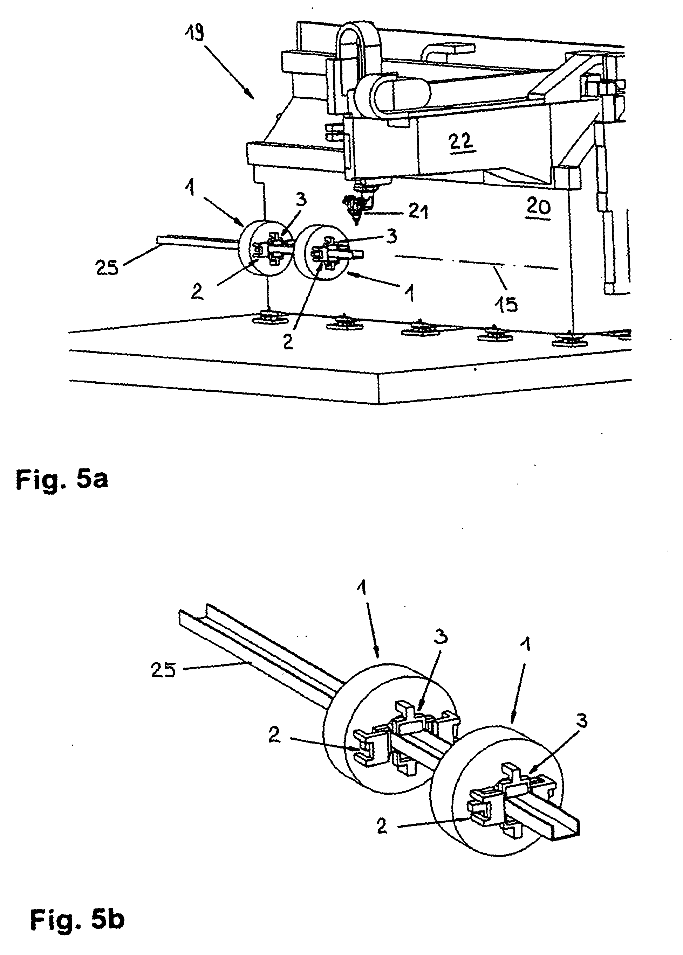

Die gemeinsame Vorwärtsbewegung der vorderen Halte- und Zentriervorrichtung 1 sowie des daran gehaltenen Profilstabes 25 entlang der Maschinen-Längsachse 15 endet, sobald der Betriebszustand gemäß den Fign. 5a, 5b erreicht ist.

Nun wird an dem von der Vorderseite der vorderen Halte- und Zentriervorrichtung 1 vorkragenden Ende des Profilstabes 25 mittels des Laserschneidkopfes 21 der Profilanschnitt erstellt. Ist zu diesem Zweck eine Relativbewegung des Laserschneidkopfes 21 und des Profilstabes 25 entlang der Maschinen-Längsachse 15 erforderlich, so kann diese Relativbewegung entweder ausschließlich durch Bewegung des Laserschneidkopfes 21 oder ausschließlich durch Bewegung des Profilstabes 25 oder durch Überlagerung von Bewegungen des Laserschneidkopfes 21 und des Profilstabes 25 ausgeführt werden. Längsbewegungen des Profilstabes 25 sind realisierbar durch eine synchrone Bewegung beider Halte- und Zentriervorrichtungen 1 entlang der Maschinen-Längsachse 15. Dabei muss die Halteeinrichtung 2 an wenigstens einer der beiden Halte- und Zentriervorrichtungen 1 in den Haltezustand überführt sein. Alternativ besteht die Möglichkeit, lediglich eine der Halte- und Zentriervorrichtungen 1 mit dem daran mittels der aktivierten Halteeinrichtung 2 fixierten Profilstab 25 längs der Maschinen-Längsachse 15 zu bewegen, während die andere Halte- und Zentriervorrichtung 1 in Richtung der Maschinen-Längsachse 15 ihre momentane Position beibehält. In diesem Fall ist die Halteeinrichtung 2 an der stationären Halte- und Zentriervorrichtung 1 in den Freigabezustand zu schalten, damit der Profilstab 25 seine Längsbewegung ausführen kann. Unabhängig von der gewählten Bewegungsalternative befinden sich die Zentriereinrichtungen 3 an beiden Halte- und Zentriervorrichtungen 1 im zentrierenden Zustand. Dadurch ist eine hochgenaue Positionierung und - sofern der Profilstab 25 eine Längsbewegung ausführt - auch eine hochgenaue Führung des Profilstabes 25 gegenüber dem Laserschneidkopf 21 gewährleistet. Unter Umständen, beispielsweise bei entsprechender Profilgeometrie, kann es erforderlich sein, den Profilstab 25 zum Erstellen des Profilanschnittes mittels der synchron betriebenen Halte- und Zentriervorrichtungen 1 um die Maschinen-Längsachse 15 zu drehen.

Spätestens nach Erstellen des Profilanschnittes wird die Halteeinrichtung 2 an der hinteren Halte- und Zentriervorrichtung 1 von dem Haltezustand in den Freigabezustand überführt. Infolgedessen kann sich nun die vordere Halte- und Zentriervorrichtung 1 mit dem daran fixierten Profilstab 25 von der hinteren Halte- und Zentriervorrichtung 1 entfernen und dadurch den Profilstab 25 gegenüber der hinteren Halte- und Zentriervorrichtung 1 vorschieben.

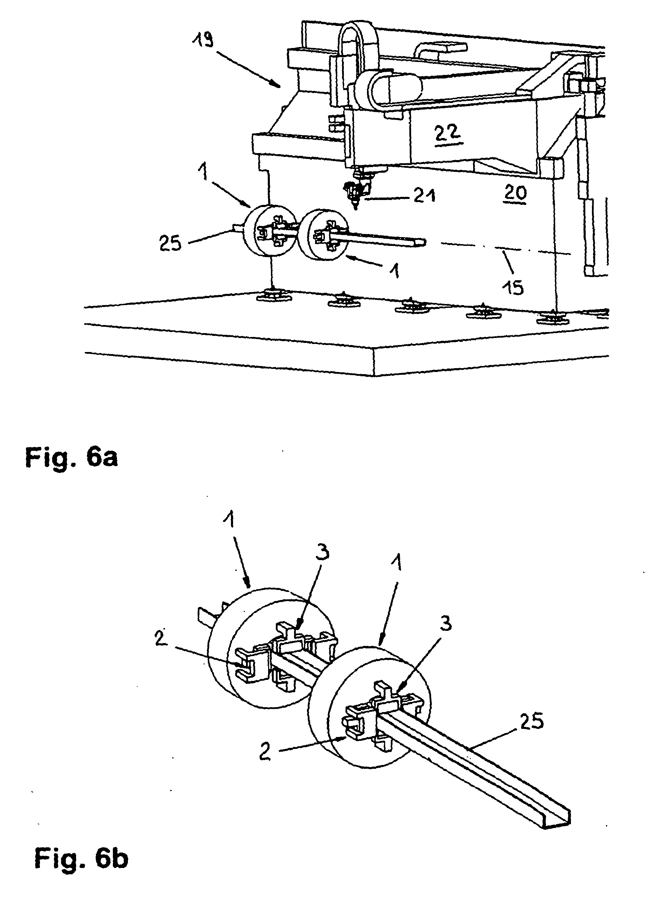

Ist die Vorschubbewegung beendet, so wird die Halteeinrichtung 2 an der hinteren Halte- und Zentriervorrichtung 1 geschlossen und die Halteeinrichtung 2 an der vorderen Halte- und Zentriervorrichtung 1 wird aus dem Haltezustand in den Freigabezustand überführt. Die vordere Halte- und Zentriervorrichtung 1 bewegt sich dann mit geöffneter Halteeinrichtung 2 in Richtung auf die hintere Halte- und Zentriervorrichtung 1 in die Position gemäß den Figuren 6a, 6b. Nun wird die Halteeinrichtung 2 an der vorderen Halte- und Zentriervorrichtung 1 in den Haltezustand überführt und es folgt die Bearbeitung der von der Vorderseite der vorderen Halte- und Zentriervorrichtung 1 vorkragenden Teillänge des Profilstabes 25 in einer dem Erstellen des Profilanschnittes entsprechenden Weise. Auch dabei ist der Profilstab 25 an beiden Halte- und Zentriervorrichtungen 1 zentriert und gegebenenfalls an einer der Halte- und Zentriervorrichtungen 1 in Richtung der Maschinen-Längsachse 15 geführt.

Zum Abarbeiten der gesamten Bearbeitungslänge an dem Profilstab 2S wird dieser erforderlichenfalls mehrfach in der vorstehend beschriebenen Art und Weise mittels der vorderen Halte- und Zentriervorrichtung 1 nachgesetzt. Dabei ist entweder die Halteeinrichtung 2 der vorderen Halte- und Zentriervorrichtung 1 oder die Halteeinrichtung 2 der hinteren Halte- und Zentriervorrichtung 1 in den Haltezustand geschaltet. Die Zentriereinrichtungen 3 an beiden Halte- und Zentriervorrichtungen 1 befinden sich stets im zentrierenden Zustand.

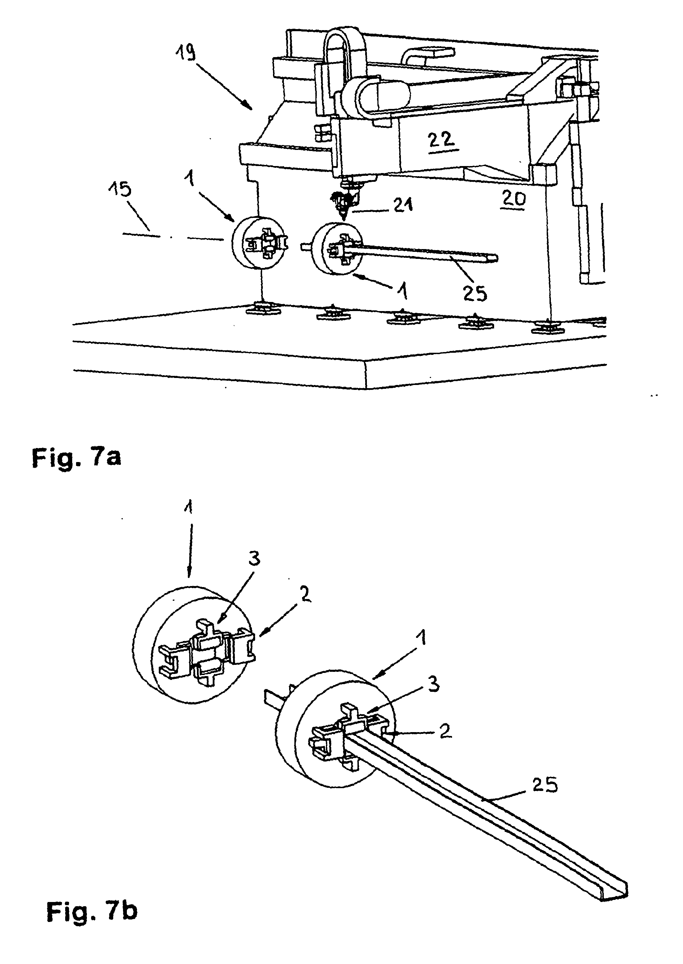

Im Laufe der Bearbeitung der Profilstabes 25 gelangt dessen hinteres Ende in den Arbeitsbereich des Laserschneidkopfes 21. Hat das hintere Ende des Profilstabes 25 die hintere Halte- und Zentriervorrichtung 1 verlassen, so ist der Profilstab 25 nur noch an der vorderen Halte- und Zentriervorrichtung 1 festgelegt (Fign. 7a, 7b). Bei geschlossener Halteeinrichtung 2 und gleichfalls geschlossener Zentriereinrichtung 3 verfährt nun die vordere Halte- und Zentriervorrichtung 1 gemeinsam mit dem Profilstab 25 entlang der Maschinen-Längsachse 15 in eine Position, in welcher der Laserschneidkopf 21 an der zu der hinteren Halte- und Zentriervorrichtung 1 weisenden Seite der vorderen Halte- und Zentriervorrichtung 1 angeordnet ist. Dort führt der Laserschneidkopf 21 die Endenbearbeitung des Profilstabes 25 durch. Auch die Endenbearbeitung des Profilstabes 25 wird entsprechend der Erstellung des Profilanschnittes durchgeführt.

Abschließend wird an der vorderen Halte- und Zentriervorrichtung 1 die Halteeinrichtung 2 in den Freigabezustand und die Zentriereinrichtung 3 in den Außerfunktionszustand überführt. Der bearbeitete Profilstab 25 kann nun maschinell, etwa über ein motorisch angetriebenes Abförderband, oder von Hand ausgeschleust werden.

Abweichend von dem vorstehend im Einzelnen beschriebenen Beispielsfall kann eine der Halte- und Zentriervorrichtungen 1 in Richtung der Maschinen-Längsachse 15 ortsfest angebracht sein. Von dem beschriebenen Bearbeitungsablauf abweichende Abläufe sind möglich.

Gleichfalls denkbar ist die Verwendung lediglich einer einzigen Halte- und Zentriervorrichtung 1, 1a der in Fig. 1 beziehungsweise in Fig. 2 gezeigten Bauart.

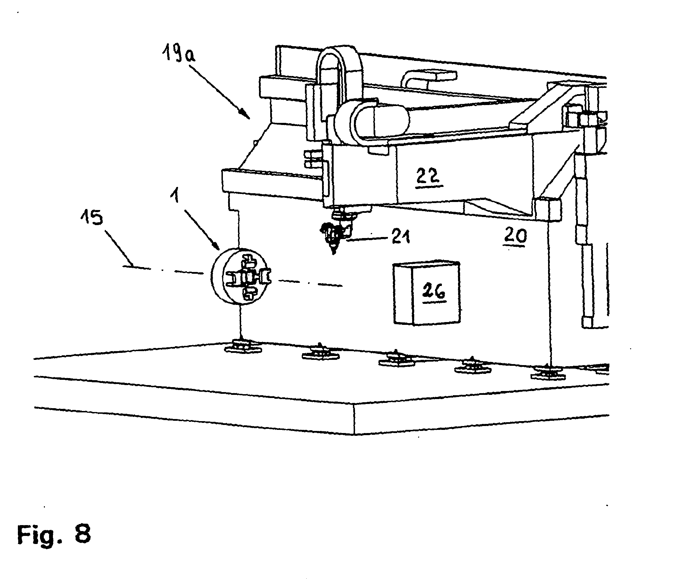

Eine derartige Laserschneidmaschine 19a ist in Fig. 8 dargestellt. Die Halte- und Zentriervorrichtung 1 ist entlang der Maschinen-Längsachse 15 verfahrbar. Mit dem Bezugszeichen 26 ist in Figur 8 eine zusätzlich zu der Halte- und Zentriervorrichtung 1 vorgesehene Werkstück-Haltevorrichtung versehen, die hinsichtlich ihrer Bauart von der Halte- und Zentriervorrichtung 1 und auch von der Halte- und Zentriervorrichtung 1a abweicht.

## Patentansprüche

1. Maschine zum Bearbeiten von länglichen Werkstücken (25), insbesondere von Metallprofilen,
• mit einer Bearbeitungseinrichtung (21), mittels derer ein mit seiner Längsrichtung entlang einer Maschinen-Längsachse (15) verlaufendes Werkstück (25) bearbeitbar ist,
• mit einer Dreheinrichtung sowie
• mit einer steuerbaren Halteeinrichtung (2, 2a) für ein Werkstück (25), die an der Dreheinrichtung angebracht und mittels der Dreheinrichtung um die Maschinen-Längsachse (15) drehbar ist und die in einen Haltezustand sowie in einen Freigabezustand überführbar ist, wobei die Halteeinrichtung (2, 2a) das Werkstück (25) bei Haltezustand in Richtung der Maschinen-Längsachse (15) festlegt und bei Freigabezustand für ei-ne Bewegung entlang der Maschinen-Längsachse (15) freigibt
**dadurch gekennzeichnet, dass**
an der Dreheinrichtung eine Zentriereinrichtung (3, 3a) für das Werkstück (25) angebracht ist, die mittels der Dreheinrichtung um die Maschinen-Längsachse (15) drehbar ist und die mit der Halteeinrichtung (2, 2a) eine Halte- und Zentriervorrichtung (1, 1a) für das Werkstück (25) bildet, an welcher die Halteeinrichtung (2, 2a) das Werkstück (25) bei Haltezustand in Richtung der Maschinen-Längsachse (15) festlegt, wobei.mittels der in einem zentrierenden Zustand befindlichen Zentriereinrichtung (3, 3a) das Werkstück (25) quer zu der Maschinen-Längsachse (15) in eine Solllage positioniert ist und wobei der Freigabezustand der Halteeinrichtung (2, 2a) und der zentrierende Zustand der Zentriereinrichtung (3, 3a) zeit-gleich realisierbar sind und das Werkstück (25) bei Freigabezustand der Halteeinrichtung (2, 2a) und bei gleichzeitig im zentrierenden Zustand befindlicher Zentriereinrichtung (3, 3a) entlang der Maschinen-Längsachse (15) relativ zu der Halte- und Zentriervorrichtung (1, 1a) bewegbar und quer zu der Maschinen-Längsachse (15) in die Solllage positioniert ist.

2. Maschine nach Ansprüch 1, **dadurch gekennzeichnet, dass** die Zentriereinrichtung (3, 3a) ein Zentrierelement (8, 9, 11, 12; 8a*,* 9a, 11a, 12a) in Form eines Wälzelementes aufweist, welches um eine quer zu der Maschinen-Längsachse (15) verlaufende Drehachse (16, 16a) drehbar gelagert ist und welches bei zentrierendem Zustand der Zentriereinrichtung (3, 3a) an einer Werkstück-Längsseite anliegt und das Werkstück (25) quer zu der Maschinen-Längsachse (15) in die Solllage positioniert.

3. Maschine nach einem der vorhergehenden Ansprüche, **dadurch gekennzeichnet, dass** die Halteeinrichtung (2a) und die Zentriereinrichtung (3a) ein gemeinsames Halte- und Zentrierelement (8a, 9a, 11a, 12a) aufweisen, welches bei zentrierendem Zustand der Zentriereinrichtung (3a) an einer Werkstück-Längsseite anliegt und das Werkstück (25) quer zu der Maschinen-Längsachse (15) in die Solllage positioniert und welches in einen dem Haltezustand der Halteeinrichtung (2a) zugeordneten Haltezustand sowie in einen dem Freigabezustand der Halteeinrichtung (2a) zugeordneten Freigabezustand überführbar ist, wobei das Halte- und Zentrierelement (8a, 9a, 11a, 12a) das Werkstück (25) im Haltezustand an der Halte- und Zentriervorrichtung (1a) in Richtung der Maschinen-Längsachse (15) festlegt und im Freigabezustand für eine Bewegung relativ zu der Halte- und Zentriervorrichtung (1a) entlang der Maschinen-Längsachse (15) freigibt.

4. Maschine nach einem der vorhergehenden Ansprüche, **dadurch gekennzeichnet, dass** als Halte- und Zentrierelement (8a, 9a, 11a, 12a) ein Wälzelement vorgesehen ist, welches um eine quer zu der Maschinen-Längsachse (15) verlaufende Drehachse (16, 16a) drehbar gelagert ist, welches bei zentrierendem Zustand der Zentriereinrichtung (3a) an einer Werkstück-Längsseite anliegt und das Werkstück (25) quer zu der Maschinen-Längsachse (15) in die Solllage positioniert und welches im Haltezustand gegen eine Drehbewegung um seine Drehachse (16a) gesperrt und Im Freigabezustand für eine Drehbewegung um seine Drehachse (16a) freigegeben bist.

5. Maschine nach einem der vorhergehenden Ansprüche, **dadurch gekennzeichnet, dass** die Zentriereinrichtung (3, 3a) zwei Paare von Zentrierelementen (8, 9, 11, 12, 8a, 9a, 11a, 12a) aufweist und die Zentrlerelemente (8, 9, 11, 12, 8a, 9a, 11a, 12a) eines jeden Zentrierelementpaares einander quer zu der Maschinen-Längsachse (15) gegenüberliegen und eine quer zu der Maschinen-Längsachse (15) verlaufende Zentrierachse (13, 14, 13a, 14a) definieren, wobei die Zentrierelementpaare entlang der Maschinen-Längsachse (15) gegeneinander versetzt sind und wobei die von den Zentrierelementpaaren definierten Zentrierachsen (13, 14, 13a, 14a) in der Projektion in eine senkrecht zu der Maschinen-Längsachse (15) angeordnete Projektionsebene unter einem Winkel, vorzugsweise unter einem rechten Winkel, zueinander verlaufen.

6. Maschine nach einem der vorhergehenden Ansprüche, **dadurch gekennzeichnet, dass** die Zentriereinrichtung (3, 3a) ein Paar von Zentrierelementen (8, 9, 11, 12, 8a, 9a, 11a, 12a) und die Halteeinrichtung (2, 2a) ein Paar von Halteelementen (4, 5, 8a, 9a, 11a, 12a) aufweist, wobei die Zentrierelemente (8, 9, 11, 12, 8a, 9a, 11a, 12a) des Zentrierelementpaares sowie die Halteelemente (4, 5, 8a, 9a, 11a, 12a) des Halteelementpaares jeweils einander quer zu der Maschinen-Längsachse (15) gegenüberliegen und wobei das Zentrierelementpaar und das Halteelementpaar entlang der Maschinen-Längsachse (15) gegeneinander versetzt sind.

7. Maschine nach einem der vorhergehenden Ansprüche, **dadurch gekennzeichnet, dass** zwei entlang der Maschinen-Längsachse (15) gegeneinander versetzt angeordnete Halte- und Zentriervorrichtungen (1, 1a) für ein Werkstück (15) vorgesehen sind, die entlang der Maschinen-Längsachse (15) relativ zueinander bewegbar sind, während sich an der einen Halte- und Zentriervorrichtung (1, 1a) die Halteeinrichtung (2, 2a) im Haltezustand und die Zentriereinrichtung (3, 3a) im zentrierenden Zustand befindet und während sich gleichzeitig an der anderen Halte- und Zentriervorrichtung (1, 1a) die Halteeinrichtung (2, 2a) im Freigabezustand und die Zentriereinrichtung (3, 3a) im zentrierenden Zustand befindet.

## Claims

1. Machine for processing elongate workpieces (25), in particular metal profile-members,
• having a processing device (21), by means of which a workpiece (25) which extends with its longitudinal direction along a longitudinal axis (15) of the machine can be processed,
• having a rotation device and
• having a controllable retention device (2, 2a) for a workpiece (25) which is fitted to the rotation device and which can be rotated about the longitudinal axis (15) of the machine by means of the rotation device and which can be shifted into a retention state and into a release state, the retention device (2, 2a) securing the workpiece (25) in the direction of the longitudinal axis (15) of the machine in the retention state and releasing the workpiece (25) for movement along the longitudinal axis (15) of the machine in the release state,
**characterised in that**
there is fitted to the rotation device a centering device (3, 3a) for the workpiece (25) which can be rotated by means of the rotation device about the longitudinal axis (15) of the machine and which forms with the retention device (2, 2a) a retention and centering device (1, 1a) for the workpiece (25), by means of which the retention device (2, 2a) secures the workpiece (25) in the direction of the longitudinal axis (15) of the machine in the retention state, the workpiece (25) being positioned transversely relative to the longitudinal axis (15) of the machine in a desired position owing to the centering device (3, 3a) which is in a centering state, and the release state of the retention device (2, 2a) and the centering state of the centering device (3, 3a) being able to be carried out at the same time and the workpiece (25), when the retention device (2, 2a) is in the release state and when the centering device (3, 3a) is in the centering state at the same time, being able to be moved along the longitudinal axis (15) of the machine relative to the retention and centering device (1, 1a) and being positioned in the desired position transversely relative to the longitudinal axis (15) of the machine.

2. Machine according to claim 1, **characterised in that** the centering device (3, 3a) has a centering element (8, 9, 11, 12; 8a, 9a, 11a, 12a) in the form of a roller element which is rotatably supported about a rotation axis (16, 16a) which extends transversely relative to the longitudinal axis (15) of the machine and which, when the centering device (3, 3a) is in a centering state, abuts a longitudinal side of the workpiece and positions the workpiece (25) in the desired position transversely relative to the longitudinal axis (15) of the machine.

3. Machine according to either of the preceding claims, **characterised in that** the retention device (2a) and the centering device (3a) have a common retention and centering element (8a, 9a, 11a, 12a) which, when the centering device (3a) is in a centering state, abuts a longitudinal side of the workpiece and positions the workpiece (25) in the desired position transversely relative to the longitudinal axis (15) of the machine and which can be shifted into a retention state which is associated with the retention state of the retention device (2a) and into a release state which is associated with the release state of the retention device (2a), the retention and centering element (8a, 9a, 11a, 12a) securing the workpiece (25) in the retention state on the retention and centering device (1a) in the direction of the longitudinal axis (15) of the machine and releasing the workpiece (25) in the release state for movement relative to the retention and centering device (1a) along the longitudinal axis (15) of the machine.

4. Machine according to any one of the preceding claims, **characterised in that** there is provided as a retention and centering element (8a, 9a, 11a, 12a) a roller element which is rotatably supported about a rotation axis (16, 16a) which extends transversely relative to the longitudinal axis (15) of the machine, which, when the centering device (3a) is in a centering state, abuts a longitudinal side of the workpiece and positions the workpiece (25) transversely relative to the longitudinal axis (15) of the machine in the desired position and which in the retention state is locked against rotational movement about the rotation axis (16a) thereof and in the release state is released for rotational movement about the rotation axis (16a) thereof.

5. Machine according to any one of the preceding claims, **characterised in that** the centering device (3, 3a) has two pairs of centering elements (8, 9, 11, 12, 8a, 9a, 11a, 12a) and the centering elements (8, 9, 11, 12, 8a, 9a, 11a, 12a) of each centering element pair are located facing each other transversely relative to the longitudinal axis (15) of the machine and define a centering axis (13, 14, 13a, 14a) which extends transversely relative to the longitudinal axis (15) of the machine, the pairs of centering elements being offset relative to each other along the longitudinal axis (15) of the machine and the centering axes (13, 14, 13a, 14a) defined by the pairs of centering elements extending in the projection in a projection plane which is arranged perpendicularly relative to the longitudinal axis (15) of the machine at an angle relative to each other, preferably at a right angle.

6. Machine according to any one of the preceding claims, **characterised in that** the centering device (3, 3a) has a pair of centering elements (8, 9, 11, 12, 8a, 9a, 11a, 12a) and the retention device (2, 2a) has a pair of retention elements (4, 5, 8a, 9a, 11a, 12a), the centering elements (8, 9, 11, 12, 8a, 9a, 11a, 12a) of the centering element pair and the retention elements (4, 5, 8a, 9a, 11a, 12a) of the retention element pair each being located facing each other transversely relative to the longitudinal axis (15) of the machine and the centering element pair and the retention element pair being offset relative to each other along the longitudinal axis (15) of the machine.

7. Machine according to any one of the preceding claims, **characterised in that** there are provided for a workpiece (15) two retention and centering devices (1, 1a) which are arranged offset relative to each other along the longitudinal axis (15) of the machine and which can be moved relative to each other along the longitudinal axis (15) of the machine, whilst on the one retention and centering device (1, 1a) the retention device (2, 2a) is in the retention state and the centering device (3, 3a) is in the centering state, and whilst at the same time on the other retention and centering device (1, 1a) the retention device (2, 2a) is in the release state and the centering device (3, 3a) is in the centering state.

## Revendications

1. Machine dévolue à l'usinage de pièces à usiner (25) de forme allongée, en particulier des profilés métalliques, comprenant
- un dispositif d'usinage (21) au moyen duquel peut être usinée une pièce (25) s'étendant, par sa direction longitudinale, le long d'un axe longitudinal (15) de la machine,
- un dispositif de mise en rotation,
- ainsi qu'un dispositif d'arrêt (2, 2a) qui peut être commandé, est destiné à une pièce à usiner (25), est installé sur le dispositif de mise en rotation, peut être animé de rotations autour de l'axe longitudinal (15) de la machine, au moyen dudit dispositif de mise en rotation, et peut être amené à une condition d'arrêt, ainsi qu'à une condition de libération, sachant qu'en condition d'arrêt, ledit dispositif d'arrêt (2, 2a) immobilise ladite pièce à usiner (25) dans la direction de l'axe longitudinal (15) de la machine, et libère ladite pièce, en condition de libération, en vue d'un mouvement le long dudit axe longitudinal (15) de la machine,
**caractérisée par le fait**
**qu'**un dispositif de centrage (3, 3a), dédié à la pièce à usiner (25) et installé sur le dispositif de mise en rotation, peut être animé de rotations autour de l'axe longitudinal (15) de la machine au moyen dudit dispositif de mise en rotation et forme, avec le dispositif d'arrêt (2, 2a), un dispositif (1, 1a) d'arrêt et de centrage dévolu à la pièce à usiner (25) et sur lequel, en condition d'arrêt, ledit dispositif d'arrêt (2, 2a) immobilise ladite pièce à usiner (25) dans la direction de l'axe longitudinal (15) de la machine, sachant qu'au moyen dudit dispositif de centrage (3, 3a) se trouvant dans une condition de centrage, ladite pièce à usiner (25) peut être amenée à une position de consigne transversalement par rapport à l'axe longitudinal (15) de la machine, sachant que la condition de libération du dispositif d'arrêt (2, 2a) et la condition de centrage du dispositif de centrage (3, 3a) peuvent être atteintes en simultanéité et sachant que, lorsque ledit dispositif d'arrêt (2, 2a) se trouve en condition de libération, et ledit dispositif de centrage (3, 3a) se trouve simultanément en condition de centrage, ladite pièce à usiner (25) peut être mue le long de l'axe longitudinal (15) de la machine, vis-à-vis dudit dispositif (1, 1a) d'arrêt et de centrage, et est amenée à la position de consigne transversalement par rapport audit axe longitudinal (15) de la machine.

2. Machine selon la revendication 1, **caractérisée par le fait que** le dispositif de centrage (3, 3a) comporte un élément de centrage (8, 9, 11, 12 ; 8a, 9a, 11a, 12a) revêtant la forme d'un élément de roulement qui est monté rotatif autour d'un axe de rotation (16, 16a) s'étendant transversalement par rapport à l'axe longitudinal (15) de la machine et qui, en condition de centrage dudit dispositif de centrage (3, 3a), est en applique contre une face longitudinale de la pièce à usiner et amène ladite pièce à usiner (25) à la position de consigne, transversalement par rapport audit axe longitudinal (15) de la machine.

3. Machine selon l'une des revendications précédentes, **caractérisée par le fait que** le dispositif d'arrêt (2a) et le dispositif de centrage (3a) sont équipés d'un élément commun (8a, 9a, 11a, 12a) d'arrêt et de centrage qui, en condition de centrage dudit dispositif de centrage (3a), est en applique contre une face longitudinale de la pièce à usiner et amène ladite pièce à usiner (25) à la position de consigne, transversalement par rapport à l'axe longitudinal (15) de la machine, et peut être amené à une condition d'arrêt associée à la condition d'arrêt du dispositif d'arrêt (2a), ainsi qu'à une condition de libération associée à la condition de libération dudit dispositif d'arrêt (2a), sachant qu'en condition d'arrêt, ledit élément (8a, 9a, 11a, 12a) d'arrêt et de centrage immobilise ladite pièce à usiner (25) contre le dispositif (1a) d'arrêt et de centrage, dans la direction de l'axe longitudinal (15) de la machine, et libère ladite pièce, en condition de libération, en vue d'un mouvement vis-à-vis dudit dispositif (1a) d'arrêt et de centrage, le long dudit axe longitudinal (15) de la machine.

4. Machine selon l'une des revendications précédentes, **caractérisée par le fait qu'**il est prévu, en tant qu'élément (8a, 9a, 11a, 12a) d'arrêt et de centrage, un élément de roulement qui est monté rotatif autour d'un axe de rotation (16, 16a) s'étendant transversalement par rapport à l'axe longitudinal (15) de la machine ; qui, en condition de centrage du dispositif de centrage (3a), est en applique contre une face longitudinale de la pièce à usiner et amène ladite pièce à usiner (25) à la position de consigne, transversalement par rapport audit axe longitudinal (15) de la machine ; et qui est empêché d'accomplir un mouvement rotatoire autour de son axe de rotation (16a), dans la condition d'arrêt, et est libéré dans la condition de libération, en vue d'un mouvement rotatoire autour de son axe de rotation (16a).

5. Machine selon l'une des revendications précédentes, **caractérisée par le fait que** le dispositif de centrage (3, 3a) comprend deux paires d'éléments de centrage (8, 9, 11, 12, 8a, 9a, 11a, 12a), les éléments de centrage (8, 9, 11, 12, 8a, 9a, 11a, 12a) de chacune desdites paires d'éléments de centrage étant situés en vis-à-vis mutuel transversalement par rapport à l'axe longitudinal (15) de la machine, et définissant un axe de centrage (13, 14, 13a, 14a) s'étendant transversalement par rapport audit axe longitudinal (15) de la machine, sachant que les paires d'éléments de centrage sont décalées les unes des autres le long dudit axe longitudinal (15) de la machine et que lesdits axes de centrage (13, 14, 13a, 14a), définis par lesdites paires d'éléments de centrage, décrivent mutuellement un angle, de préférence un angle droit en projection dans un plan de projection disposé perpendiculairement audit axe longitudinal (15) de la machine.

6. Machine selon l'une des revendications précédentes, **caractérisée par le fait que** le dispositif de centrage (3, 3a) présente une paire d'éléments de centrage (8, 9, 11, 12, 8a, 9a, 11a, 12a) et le dispositif d'arrêt (2, 2a) comporte une paire d'éléments d'arrêt (4, 5, 8a, 9a, 11a, 12a), les éléments de centrage (8, 9, 11, 12, 8a, 9a, 11a, 12a) de ladite paire d'éléments de centrage, ainsi que les éléments d'arrêt (4, 5, 8a, 9a, 11a, 12a) de ladite paire d'éléments d'arrêt, étant respectivement situés en vis-à-vis mutuel transversalement par rapport à l'axe longitudinal (15) de la machine, ladite paire d'éléments de centrage et ladite paire d'éléments d'arrêt étant décalées l'une de l'autre le long dudit axe longitudinal (15) de la machine.

7. Machine selon l'une des revendications précédentes, **caractérisée par** la présence, pour une pièce à usiner (25), de deux dispositifs (1, 1a) d'arrêt et de centrage agencés avec décalage mutuel le long de l'axe longitudinal (15) de la machine et mobiles l'un par rapport à l'autre le long dudit axe longitudinal (15) de la machine, sachant que le dispositif d'arrêt (2, 2a) se trouve dans la condition d'arrêt et le dispositif de centrage (3, 3a) se trouve dans la condition de centrage, sur l'un (1, 1a) desdits dispositifs d'arrêt et de centrage, alors que, dans le même temps, le dispositif d'arrêt (2, 2a) se trouve dans la condition de libération et le dispositif de centrage (3, 3a) se trouve dans la condition de centrage sur l'autre dispositif (1, 1a) d'arrêt et de centrage.
